# EUROPEAN PATENT SPECIFICATION

(11) **EP 3 954 607 B1**
(45) Date of publication and mention of the grant of the patent: **08.01.2025**
(21) Application number: 21184377.6
(22) Date of filing: 07.07.2021
(51) Int. Cl.: G10K 11/16, B64U 10/20, B64U 20/20, B64U 50/19

(54) **NOISE SIGNATURE PROXIMITY WARNING SYSTEM AND FEEDBACK MECHANISM FOR AIRCRAFT**
SYSTEM ZUR WARNUNG BEI GERÄUSCHSIGNATURNÄHE UND RÜCKMELDUNGSMECHANISMUS FÜR FLUGZEUG
SYSTÈME D'AVERTISSEMENT DE PROXIMITÉ DE SIGNATURE DE BRUIT ET MÉCANISME DE RÉTOUR POUR AÉRONEF

(30) Priority: 21.07.2020 US 202016934599
(43) Date of publication of application: 16.02.2022
(73) Proprietor: Honeywell International Inc., Charlotte, NC 28202 (US)
(72) Inventor: SURACE, Lawrence, Charlotte, 28202 (US); CLARK, Dereck, Charlotte, 28202 (US); HAWLEY, Christopher, Charlotte, 28202 (US)
(74) Representative: LKGlobal UK Ltd.

(56) References cited:
- EP-A1- 3 543 119
- WO-A1-2019/125832
- US-A1- 2019 161 169
- US-B1- 9 415 870
- US-B2- 10 435 148
- UBER: "Fast-Forwarding to a Future of On-Demand Urban Air Transportation Introduction", 27 October 2016 (2016-10-27), pages 1 - 98, XP055807611, Retrieved from the Internet <URL:https://www.uber.com/elevate.pdf> [retrieved on 20210526]

## Description

### TECHNICAL FIELD

Embodiments of the subject matter described herein relate generally to aerial vehicles. More particularly, embodiments of the subject matter relate to noise reduction systems and methods in aerial vehicles.

### BACKGROUND

The overall success of the UAM (urban air mobility) market may be tied to noise reduction. Noise reduction may be a vital component for community acceptance.

Hence, it is desirable to provide systems and methods for noise reduction in aerial vehicles. Furthermore, other desirable features and characteristics of the present invention will become apparent from the subsequent detailed description and the appended claims, taken in conjunction with the accompanying drawings and the foregoing technical field and background. US10435148, US9415870, EP3543119, US2019/161169 disclose UAV with a noise reduction concept. US 10435148 discloses is a system for controlling acoustic radiation from an aircraft. The system comprising a plurality of rotor systems (one or more) and a noise controller configured to regulate acoustic radiation from the plurality of rotor systems. The noise controller can be configured to regulate a commanded flight setting from the flight control system and to output a regulated flight setting to the plurality of rotor systems. Based on the regulated flight setting, the plurality of rotor systems are configured to generate, individually and in aggregate, acoustic radiation having a target acoustic behavior.

### SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A noise reduction system in a vertical takeoff and landing (VTOL) vehicle is provided according to claim 1.

A method in a vertical takeoff and landing (VTOL) vehicle for reducing the level of noise output is provided according to claim 5.

Furthermore, other desirable features and characteristics will become apparent from the subsequent detailed description and the appended claims, taken in conjunction with the accompanying drawings and the preceding background.

### BRIEF DESCRIPTION OF THE DRAWINGS

Embodiments of the subject matter will hereinafter be described in conjunction with the following drawing figures, wherein like numerals denote like elements, and wherein:
FIG. 1 is a block diagram depicting an example vertical takeoff and landing (VTOL) flight system that includes a Noise Signature Proximity Warning System (NPWS) for selectively employing noise mitigation efforts, in accordance with some embodiments;
FIG. 2 is a process flow chart depicting an example process performed in an example NPWS, in accordance with some embodiments; and
FIG. 3 is a process flow chart depicting an example process in an VTOL vehicle for reducing the level of noise output, in accordance with some embodiments.

### DETAILED DESCRIPTION

The following detailed description is merely exemplary in nature and is not intended to limit the application and uses. Furthermore, there is no intention to be bound by any expressed or implied theory presented in the preceding technical field, background, summary, or the following detailed description. As used herein, the term "module" refers to any hardware, software, firmware, electronic control component, processing logic, and/or processor device, individually or in any combination, including without limitation: application specific integrated circuit (ASIC), a field-programmable gate-array (FPGA), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements.

The subject matter described herein discloses apparatus, systems, techniques and articles for noise reduction systems in aerial vehicles. To achieve noise reduction goals, unique noise cancelling / mitigation methods are introduced that can affect both the vehicle and vertiport noise levels and incorporate novel algorithm-based techniques versus traditional motor and propeller design approaches to noise reduction.

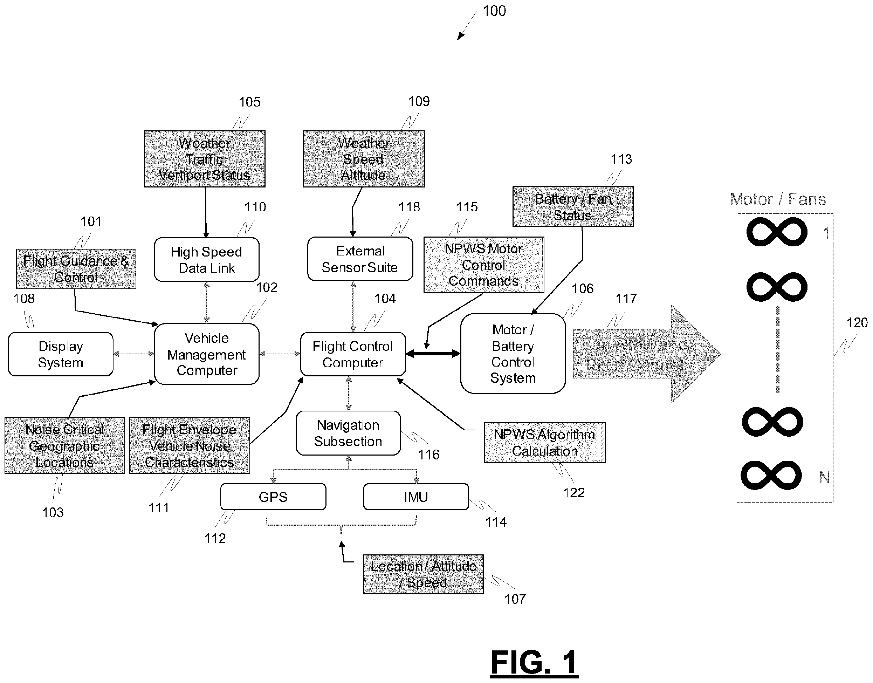

FIG. 1 is a block diagram depicting an example VTOL (vertical takeoff and landing) flight system 100 in a VTOL vehicle that includes a Noise Signature Proximity Warning System (NPWS) 122 for selectively employing noise mitigation efforts. The example VTOL vehicle may be an eVTOL (electric vertical takeoff and landing) vehicle that is powered by batteries as the primary energy source to provide electrical power or a hVTOL (hybrid vertical takeoff and landing) vehicle. A hVTOL may utilize as an energy source to produce electrical power: batteries and hydrogen fuel (energy source) coupled with a fuel cell to generate electricity to power the vehicle; batteries and hydrocarbon fuel (energy source such as jet fuel) to power a Gas Turbine Engine that is coupled with an electrical generator to produce electrical power for the vehicle; or other energy source combinations (or hybrids) can be envisioned to produce electrical power to ultimately provide power to the electric propulsion system (motor[s], fan[s], and/or propeller[s], and associated controllers]) that could contribute to the noise signature produced by the vehicle. The example VTOL flight system 100 includes a vehicle management computer 102, a flight control computer 104, and a motor/battery control system 106.

The vehicle management computer 102, which provides processing resources for flight control modules, display control modules, an onboard storage module, and/or a communication control module, is configured to manage vehicle management functions, is coupled to a display system 108 for displaying vehicle management features to flight crew, and is configured to receive flight guidance and control data 101 and weather/traffic/Vertiport status data 103, via a high speed data link 110, for use in performing its vehicle management functions. Additionally, the vehicle management computer 102 is configured to receive noise critical geographical locations data 105 for use by the NPWS 122 to determine when to employ noise mitigation efforts.

The flight control computer 104, which actuates the primary flight control surfaces to drive the flight path of the aircraft while also providing finer control for stability, receives location/altitude/speed data 107 from an onboard global positioning system (GPS) 112 and/or inertial measurement unit (IMU) 114 via a navigation subsection 116 and weather/speed/altitude data 109 via an external sensor suite 118. The flight control computer 104 is communicatively coupled to the vehicle management computer 102 and also receives flight envelope vehicle noise characteristics data for use by the NPWS 122 to determine when to employ noise mitigation efforts.

The motor/battery control system 106 generates control signals 117 for individually controlling the fan RPM and pitch for each of the plurality of motors and fans 120 on the VTOL vehicle. The motor/battery control system 106 is communicatively coupled to the flight control computer 104 and receives battery and fan status data 113 from the plurality of motors and fans 120.

The NPWS 122 may reside in and be implemented by the vehicle management computer 102, the flight control computer 104, or some other processing element on the VTOL. The NPWS 122 computes power modulations (*e*.*g*., realized in propeller RPM) to be made at each individual motor (from the plurality of motors and fans 120) that would yield the lowest noise contribution, while still permitting safe vehicle performance. The NPWS 122, based on the computations, is configured to generate motor control commands 115 that are provided to the motor/battery control system 106 which, in turn, controls the fan RPM and pitch for each of the plurality of motors and fans 120.

The NPWS 122 consumes inputs including battery information comprising battery charge, battery temperature and battery discharge rates over a calculated flight envelope and one or more of (but are not limited to):
weather conditions (*e*.*g*., from direct measurement from vehicle sources or from cloud-based sources via secure data link) such as temperature, humidity, and winds; vehicle parameters such as location *(e.g.,* from GPS or other sources), speed *(e.g.,* horizonal and vertical from GPS or on-board pitot systems), attitude (*e*.*g*., from attitude and heading reference system), weight (*e.g.,* calculated from onboard systems), and altitude (*e.g.,* barometric, radar altitude, GPS in AGL); noise data such as existing (*e.g.,* standard) area baseline noise map (*e.g.,* existing for Dallas), open source map outlining other sources of noise mapping, and 3D layout and applications of predictive analysis of noise patterns; vehicle flight envelope data (*e.g.,* from flight certification parameters and embedding in the vehicle control laws); estimated current vehicle noise emission (*e*.*g*., from flight testing and certification); flight guidance information (*e.g.,* from the on-board flight/navigation system) such as time/distance to destination and approach parameters to destination; and traffic/vertiport status data.

The NPWS 122 includes a controller that can reside in the vehicle management computer102, flight control computer 104, a dedicated computing device on the VTOL, or some other onboard computing device on the VTOL. The controller uses a series of available information, at the vehicle level, to calculate the adjustment of individual motors (in a VTOL aircraft) to allow the power (and resulting RPMs) of the motors to be dynamically adjusted (either individually or as a set) in a manner that allows for both safe operations and significantly reduce noise levels.

The controller includes at least one processor and a computer-readable storage device or media encoded with programming instructions for configuring the controller. The processor may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the controller.

The NPWS 122 is configured to: identify a VTOL noise level at which the VTOL vehicle can operate at a specific geographical location to not cause a total noise level at the geographical location to exceed a predetermined threshold noise level; dynamically determine, for the plurality of vehicle lifter motors, a motor-specific fan RPM and a motor-specific fan pitch that will allow the VTOL vehicle to achieve sufficient lift and not exceed the identified VTOL noise level at the specific geographical location based on VTOL vehicle noise characteristics for the VTOL vehicle and an ambient noise level at the geographical location; determine whether the determined motor-specific fan RPM and motor-specific fan pitch for the plurality of vehicle lifter motors will allow the VTOL vehicle to operate within its safety envelope; and cause a motor-specific fan RPM command and a motor-specific fan pitch command to be sent to a lifter motor controller to cause the vehicle lifter motors to operate at the determined motor-specific fan RPM and motor-specific fan pitch for the lifter motor at the specific geographical location when it is determined that the determined motor-specific fan RPM and motor-specific fan pitch for the plurality of vehicle lifter motors will allow the VTOL vehicle to operate within its safety envelope.

The NPWS 122 is further configured to: retrieve vehicle lifter motor parameters comprising a battery status for the plurality of vehicle lifter motors on the VTOL vehicle and a fan status for the plurality of vehicle lifter motors on the VTOL vehicle; and dynamically determine, for the plurality of vehicle lifter motors, the motor-specific fan RPM and the motor-specific fan pitch that will allow the VTOL vehicle to achieve sufficient lift and not exceed the identified VTOL noise level at the specific geographical location based on the retrieved vehicle lifter motor parameters. The NPWS 122 may be further configured to: retrieve VTOL operating parameters at the specific geographical location comprising one or more of location, altitude, and speed; and dynamically determine, for the plurality of vehicle lifter motors, the motor-specific fan RPM and the motor-specific fan pitch that will allow the VTOL vehicle to achieve sufficient lift and not exceed the identified VTOL noise level at the specific geographical location based on the retrieved operating parameters. The NPWS 122 may be further configured to: retrieve environmental parameters for the specific geographical location, wherein the retrieved environmental parameters comprise one or more of weather, wind, traffic status, and vertiport status; and dynamically determine, for the plurality of vehicle lifter motors, the motor-specific fan RPM and the motor-specific fan pitch that will allow the VTOL vehicle to achieve sufficient lift and not exceed the identified VTOL noise level at the specific geographical location based on the retrieved environmental parameters. The NPWS 122 may be further configured to: dynamically determine, for the plurality of vehicle lifter motors, the motor-specific fan RPM and the motor-specific fan pitch that will allow the VTOL vehicle to achieve sufficient lift and not exceed the identified VTOL noise level at the specific geographical location during a takeoff or landing at the geographical location. The VTOL noise level to not cause the total noise level to exceed the predetermined noise threshold level may be determined based on the difference between the predetermined noise threshold level and a measured ambient noise level at the geographical location. The predetermined noise threshold level may be a maximum noise level specific to the specific geographical location.

The NPWS 122 may be implemented using Artificial Intelligence/Machine Learning (AI/ML) techniques that includes an algorithm to "learn" how and when to apply its noise reduction parameters based on multiple dynamic environmental changes. These changes will automatically and dynamically adapt to changing geographical noise levels and restrictions of various areas without lengthy and expensive updates associated with traditional database implementation.

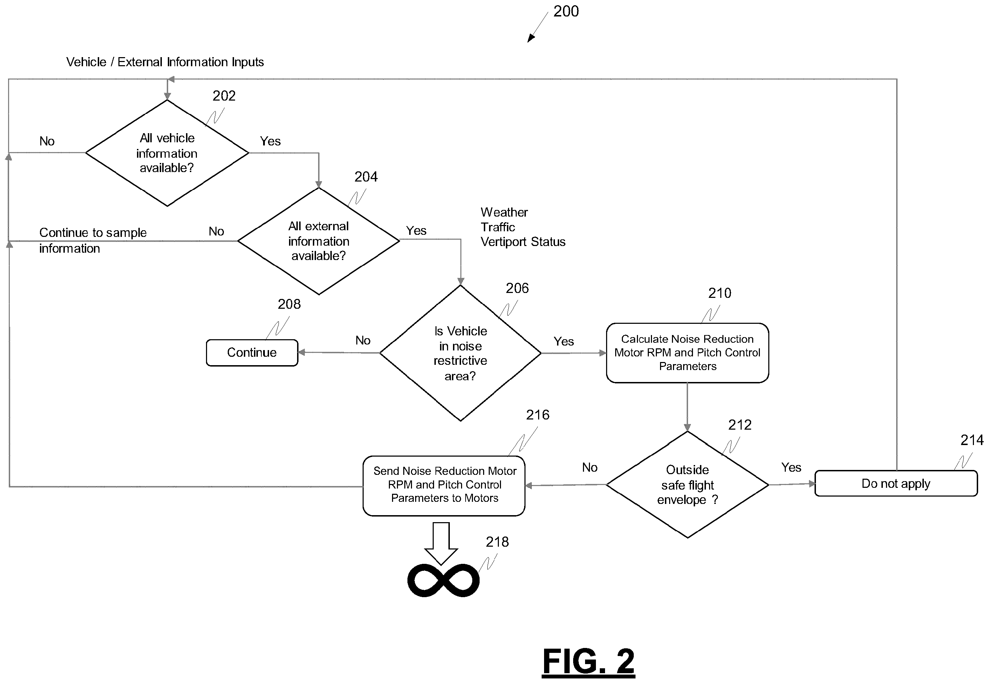

FIG. 2 is a process flow chart depicting an example process 200 performed in an example NPWS. The example process 200 starts by determining that a minimum set of data/information from both the vehicle (decision 202) and external sources (decision 204) needed for noise adjustments are available. If the minimum set is not available (no at decision 202 or decision 204), then the NPWS will not generate motor commands.

If the minimum set of data/information is available (yes at decision 202 and decision 204), the NPWS will determine if the vehicle had entered a geographical area associated with lower VTOL noise restrictions (decision 206). If the vehicle had not entered a geographical area associated with lower VTOL noise restrictions (no at decision 206), then the NPWS will not generate motor commands (operation 208). If the vehicle had entered a geographical area associated with lower VTOL noise restrictions (yes at decision 206), the NPWS will calculate the correct power adjustments (*e*.*g*., motor RPM and pitch control parameters) required to reduce the vehicle noise emissions (operation 210). The NPWS will determine if the calculated power adjustments would cause the vehicle to operate outside a safe flight envelope (decision 212). If the calculated power adjustments would cause the vehicle to operate outside a safe flight envelope (yes at decision 212), then the NPWS will recognize this potential and cancel the application of any noise reduction parameters (operation 214). If the calculated power adjustments would not cause the vehicle to operate outside a safe flight envelope (no at decision 212), then the NPWS will cause the noise reduction motor RPM and pitch control parameters to be sent to the motors 218 (operation 216).

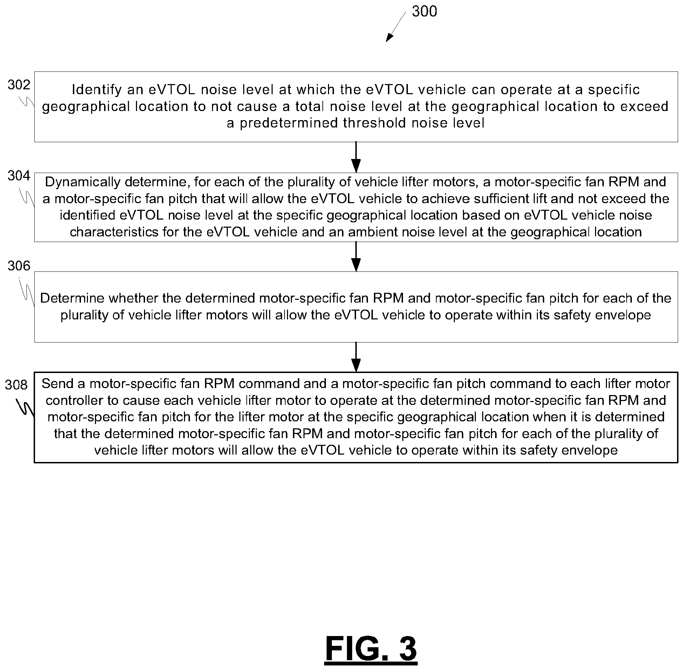

FIG. 3 is a process flow chart depicting an example process 300 in a vertical takeoff and landing (VTOL) vehicle for reducing the level of noise output. The VTOL comprises a plurality of vehicle lifter motors and a lifter motor controller. The order of operation within the process 300 is not limited to the sequential execution as illustrated in the figure, but may be performed in one or more varying orders as applicable and in accordance with the present disclosure.

The example process 300 includes identifying a VTOL noise level at which the VTOL vehicle can operate at a specific geographical location to not cause a total noise level at the geographical location to exceed a predetermined threshold noise level (operation 302). The VTOL noise level to not cause the total noise level to exceed the predetermined noise threshold level may be determined based on the difference between the predetermined noise threshold level and a measured ambient noise level at the geographical location. The predetermined noise threshold level may be a maximum noise level specific to the specific geographical location.

The example process 300 includes dynamically determining, for the plurality of vehicle lifter motors, a motor-specific fan RPM and a motor-specific fan pitch that will allow the VTOL vehicle to achieve sufficient lift and not exceed the identified VTOL noise level at the specific geographical location based on VTOL vehicle noise characteristics for the VTOL vehicle and an ambient noise level at the geographical location (operation 304). The example process 300 further comprises retrieving vehicle lifter motor parameters comprising a battery status for the plurality of vehicle lifter motors on the VTOL vehicle and a fan status for the plurality of vehicle lifter motors on the VTOL vehicle; and dynamically determining, for the plurality of vehicle lifter motors, the motor-specific fan RPM and the motor-specific fan pitch that will allow the VTOL vehicle to achieve sufficient lift and not exceed the identified VTOL noise level at the specific geographical location based on the retrieved vehicle lifter motor parameters. The example process 300 may further comprise retrieving VTOL operating parameters at the specific geographical location comprising one or more of location, altitude, and speed; and dynamically determining, for the plurality of vehicle lifter motors, the motor-specific fan RPM and the motor-specific fan pitch that will allow the VTOL vehicle to achieve sufficient lift and not exceed the identified VTOL noise level at the specific geographical location based on the retrieved operating parameters. The example process 300 may further comprise retrieving environmental parameters for the specific geographical location, the retrieved environmental parameters comprising one or more of weather, wind, traffic status, and vertiport status; and dynamically determining, for the plurality of vehicle lifter motors, the motor-specific fan RPM and the motor-specific fan pitch that will allow the VTOL vehicle to achieve sufficient lift and not exceed the identified VTOL noise level at the specific geographical location based on the retrieved environmental parameters. The example process 300 may further comprise dynamically determining, for the plurality of vehicle lifter motors, the motor-specific fan RPM and the motor-specific fan pitch that will allow the VTOL vehicle to achieve sufficient lift and not exceed the identified VTOL noise level at the specific geographical location during a takeoff or landing at the geographical location.

The example process 300 includes determining whether the determined motor-specific fan RPM and motor-specific fan pitch for the plurality of vehicle lifter motors will allow the VTOL vehicle to operate within its safety envelope (operation 306) and sending a motor-specific fan RPM command and a motor-specific fan pitch command to the lifter motor controller to cause the vehicle lifter motors to operate at the determined motor-specific fan RPM and motor-specific fan pitch for the lifter motor at the specific geographical location when it is determined that the determined motor-specific fan RPM and motor-specific fan pitch for the plurality of vehicle lifter motors will allow the VTOL vehicle to operate within its safety envelope (operation 308).

Described herein are apparatus, systems, techniques and articles for providing a noise reduction system in an aerial vehicle. The apparatus, systems, techniques and articles provided herein are provided in the context of an example implementation in a VTOL vehicle. The apparatus, systems, techniques and articles provided herein may also be realized in other aerial vehicles such as drones, UAVs (unmanned aerial vehicles), helicopters and others.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A noise reduction system (122) in a vertical takeoff and landing (VTOL) vehicle comprising a plurality of vehicle lifter motors (120) and a lifter motor controller (106) for the vehicle lifter motors, the noise reduction system comprising a controller (102, 104) configured to:
identify a VTOL noise level at which the VTOL vehicle can operate at a specific geographical location to not cause a total noise level at the geographical location to exceed a predetermined threshold noise level;
retrieve vehicle lifter motor parameters comprising a battery status for the plurality of vehicle lifter motors on the VTOL vehicle , the battery status comprising battery charge, battery temperature and battery discharge rates over a calculated flight envelope for each of the plurality of vehicle lifter motors, and a fan status for the plurality of vehicle lifter motors on the VTOL vehicle; and
dynamically determine, for the plurality of vehicle lifter motors, a motor-specific fan RPM and a motor-specific fan pitch (117) that will allow the VTOL vehicle to achieve sufficient lift and not exceed the identified VTOL noise level at the specific geographical location based on VTOL vehicle noise characteristics for the VTOL vehicle and an ambient noise level measured at the geographical location and the retrieved vehicle lifter motor parameters;
determine whether the determined motor-specific fan RPM and motor-specific fan pitch (117) for the plurality of vehicle lifter motors will allow the VTOL vehicle to operate within its safety envelope; and
cause a motor-specific fan RPM command and a motor-specific fan pitch command (115) to be sent to the lifter motor controller (106) to cause the vehicle lifter motors to operate at the determined motor-specific fan RPM and motor-specific fan pitch for the lifter motor at the specific geographical location when it is determined that the determined motor-specific fan RPM and motor-specific fan pitch for the plurality of vehicle lifter motors will allow the VTOL vehicle to operate within its safety envelope.

2. The noise reduction system of claim 1, wherein the controller (102, 104) is further configured to:
retrieve VTOL operating parameters at the specific geographical location comprising one or more of location, altitude, and speed; and
dynamically determine, for the plurality of vehicle lifter motors, the motor-specific fan RPM and the motor-specific fan pitch that will allow the VTOL vehicle to achieve sufficient lift and not exceed the identified VTOL noise level at the specific geographical location based on the retrieved operating parameters.

3. The noise reduction system of claim 2, wherein the controller (102, 104) is further configured to:
retrieve environmental parameters for the specific geographical location, the retrieved environmental parameters comprising one or more of weather, wind, traffic status, and vertiport status; and
dynamically determine, for the plurality of vehicle lifter motors, the motor-specific fan RPM and the motor-specific fan pitch that will allow the VTOL vehicle to achieve sufficient lift and not exceed the identified VTOL noise level at the specific geographical location based on the retrieved environmental parameters.

4. The noise reduction system of claim 3, wherein the controller (102, 104) is further configured to:
dynamically determine, for the plurality of vehicle lifter motors, the motor-specific fan RPM and the motor-specific fan pitch that will allow the VTOL vehicle to achieve sufficient lift and not exceed the identified VTOL noise level at the specific geographical location during a takeoff or landing at the geographical location.

5. A method in a vertical takeoff and landing (VTOL) vehicle for reducing a level of noise output, the VTOL vehicle comprising a plurality of vehicle lifter motors and a lifter motor controller for the vehicle lifter motors, the method comprising:
identifying a VTOL noise level at which the VTOL vehicle can operate at a specific geographical location to not cause a total noise level at the geographical location to exceed a predetermined threshold noise level;
retrieving vehicle lifter motor parameters comprising a battery status for the plurality of vehicle lifter motors on the VTOL vehicle, the battery status comprising battery charge, battery temperature and battery discharge rates over a calculated flight envelope for each of the plurality of vehicle lifter motors, and a fan status for the plurality of vehicle lifter motors on the VTOL vehicle;
dynamically determining, for the plurality of vehicle lifter motors, a motor-specific fan RPM and a motor-specific fan pitch that will allow the VTOL vehicle to achieve sufficient lift and not exceed the identified VTOL noise level at the specific geographical location based on VTOL vehicle noise characteristics for the VTOL vehicle and an ambient noise level measured at the geographical location and the retrieved vehicle lifter motor parameters;
determining whether the determined motor-specific fan RPM and motor-specific fan pitch for the plurality of vehicle lifter motors will allow the VTOL vehicle to operate within its safety envelope; and
sending a motor-specific fan RPM command and a motor-specific fan pitch command to the lifter motor controller to cause the vehicle lifter motors to operate at the determined motor-specific fan RPM and motor-specific fan pitch for the lifter motor at the specific geographical location when it is determined that the determined motor-specific fan RPM and motor-specific fan pitch for the plurality of vehicle lifter motors will allow the VTOL vehicle to operate within its safety envelope.

6. The method of claim 5, further comprising:
retrieving VTOL operating parameters at the specific geographical location comprising one or more of location, altitude, and speed; and
dynamically determining, for the plurality of vehicle lifter motors, the motor-specific fan RPM and the motor-specific fan pitch that will allow the VTOL vehicle to achieve sufficient lift and not exceed the identified VTOL noise level at the specific geographical location based on the retrieved operating parameters.

7. The method of claim 6, further comprising:
retrieving environmental parameters for the specific geographical location, the retrieved environmental parameters comprising one or more of weather, wind, traffic status, and vertiport status; and
dynamically determining, for the plurality of vehicle lifter motors, the motor-specific fan RPM and the motor-specific fan pitch that will allow the VTOL vehicle to achieve sufficient lift and not exceed the identified VTOL noise level at the specific geographical location based on the retrieved environmental parameters.

8. The method of claim 7, further comprising:
dynamically determining, for the plurality of vehicle lifter motors, the motor-specific fan RPM and the motor-specific fan pitch that will allow the VTOL vehicle to achieve sufficient lift and not exceed the identified VTOL noise level at the specific geographical location during a takeoff or landing at the geographical location.

## Patentansprüche

1. Lärmreduzierungssystem (122) in einem senkrecht startenden und landenden (VTOL) Fahrzeug, umfassend eine Vielzahl von Fahrzeugauftriebsmotoren (120) und eine Auftriebsmotorsteuerung (106) für die Fahrzeugauftriebsmotoren, wobei das Lärmreduktionssystem eine Steuerung (102, 104) umfasst, die dazu konfiguriert ist:
einen VTOL-Lärmpegel zu identifizieren, auf dem das VTOL-Fahrzeug an einem spezifischen geographischen Ort betrieben werden kann, um nicht zu verursachen, dass ein Gesamtlärmpegel an dem geographischen Ort einen vorherbestimmten Schwellenlärmpegel überschreitet;
Fahrzeugauftriebsmotorparameter abzurufen, umfassend einen Batteriestatus für die Vielzahl von Fahrzeugauftriebsmotoren an dem VTOL-Fahrzeug, wobei der Batteriestatus eine Batterieladung, eine Batterietemperatur und Batterieentladeraten über einer berechneten Flugbereichsgrenze für jeden der Vielzahl von Fahrzeugauftriebsmotoren umfasst, und einen Lüfterstatus für die Vielzahl von Fahrzeugauftriebsmotoren an dem VTOL-Fahrzeug; und
für die Vielzahl von Fahrzeugauftriebsmotoren eine motorspezifische Lüfterdrehzahl und einen motorspezifischen Lüfterneigungswinkel (117) dynamisch zu bestimmen, die es dem VTOL-Fahrzeug erlauben, hinreichend Auftrieb zu erzielen und den identifizierten VTOL-Lärmpegel an dem spezifischen geographischen Ort auf Basis von VTOL-Fahrzeuglärmmerkmalen für das VTOL-Fahrzeug und einem an dem geographischen Ort gemessenen Umgebungslärmpegel und den abgerufenen Fahrzeugauftriebsmotorparametern nicht zu überschreiten;
zu bestimmen, ob die bestimmte motorspezifische Lüfterdrehzahl und der bestimmte motorspezifische Lüfterneigungswinkel (117) für die Vielzahl von Fahrzeugauftriebsmotoren es dem VTOL-Fahrzeug erlauben, innerhalb seiner Sicherheitsbereichsgrenze betrieben zu werden; und
zu verursachen, dass ein motorspezifischer Lüfterdrehzahlbefehl und ein motorspezifischer Lüfterneigungswinkelbefehl (115) an die Auftriebsmotorsteuerung (106) gesendet werden, um zu verursachen, dass die Fahrzeugauftriebsmotoren mit der bestimmten motorspezifischen Lüfterdrehzahl und dem bestimmten motorspezifischen Lüfterneigungswinkel für den Auftriebsmotor an dem spezifischen geographischen Ort betrieben werden, wenn bestimmt wird, dass die bestimmte motorspezifische Lüfterdrehzahl und der bestimmte motorspezifische Lüfterneigungswinkel für die Vielzahl von Fahrzeugauftriebsmotoren es dem VTOL-Fahrzeug erlauben, innerhalb seiner Sicherheitsbereichsgrenze betrieben zu werden.

2. Lärmreduzierungssystem nach Anspruch 1, wobei die Steuerung (102, 104) ferner dazu konfiguriert ist:
VTOL-Betriebsparameter an dem spezifischen geographischen Ort abzurufen, die eines oder mehrere aus Ort, Flughöhe und Geschwindigkeit umfassen; und
für die Vielzahl von Fahrzeugauftriebsmotoren die motorspezifische Lüfterdrehzahl und den motorspezifischen Lüfterneigungswinkel dynamisch zu bestimmen, die es dem VTOL-Fahrzeug erlauben, hinreichend Auftrieb zu erzielen und den identifizierten VTOL-Lärmpegel an dem spezifischen geographischen Ort auf Basis der abgerufenen Betriebsparameter nicht zu überschreiten.

3. Lärmreduzierungssystem nach Anspruch 2, wobei die Steuerung (102, 104) ferner dazu konfiguriert ist:
Umgebungsparameter für den spezifischen geographischen Ort abzurufen, wobei die abgerufenen Umgebungsparameter eines oder mehrere aus Wetter, Wind, Verkehrsstatus und Vertiport-Status umfassen; und
für die Vielzahl von Fahrzeugauftriebsmotoren eine motorspezifische Lüfterdrehzahl und einen motorspezifischen Lüfterneigungswinkel dynamisch zu bestimmen, die es dem VTOL-Fahrzeug erlauben, hinreichend Auftrieb zu erzielen und den identifizierten VTOL-Lärmpegel an dem spezifischen geographischen Ort auf Basis der abgerufenen Umgebungsparameter nicht zu überschreiten.

4. Lärmreduzierungssystem nach Anspruch 3, wobei die Steuerung (102, 104) ferner dazu konfiguriert ist:
für die Vielzahl von Fahrzeugauftriebsmotoren die motorspezifische Lüfterdrehzahl und den motorspezifischen Lüfterneigungswinkel dynamisch zu bestimmen, die es dem VTOL-Fahrzeug erlauben, hinreichend Auftrieb zu erzielen und den identifizierten VTOL-Lärmpegel an dem spezifischen geographischen Ort während eines Starts oder einer Landung an dem geographischen Ort nicht zu überschreiten.

5. Verfahren in einem senkrecht startenden und landenden (VTOL) Fahrzeug zum Reduzieren eines Pegels der Lärmemission, wobei das VTOL-Fahrzeug eine Vielzahl von Fahrzeugauftriebsmotoren und eine Auftriebsmotorsteuerung für die Fahrzeugauftriebsmotoren umfasst, das Verfahren umfassend:
Identifizieren eines VTOL-Lärmpegels, auf dem das VTOL-Fahrzeug an einem spezifischen geographischen Ort betrieben werden kann, um nicht zu verursachen, dass ein Gesamtlärmpegel an dem geographischen Ort einen vorherbestimmten Schwellenlärmpegel überschreitet;
Abrufen von Fahrzeugauftriebsmotorparametern, umfassend einen Batteriestatus für die Vielzahl von Fahrzeugauftriebsmotoren an dem VTOL-Fahrzeug, wobei der Batteriestatus eine Batterieladung, eine Batterietemperatur und Batterieentladeraten über einer berechneten Flugbereichsgrenze für jeden der Vielzahl von Fahrzeugauftriebsmotoren umfasst, und einen Lüfterstatus für die Vielzahl von Fahrzeugauftriebsmotoren an dem VTOL-Fahrzeug;
dynamisches Bestimmen, für die Vielzahl von Fahrzeugauftriebsmotoren, einer motorspezifischen Lüfterdrehzahl und eines motorspezifischen Lüfterneigungswinkels, die es dem VTOL-Fahrzeug erlauben, hinreichend Auftrieb zu erzielen und den identifizierten VTOL-Lärmpegel an dem spezifischen geographischen Ort auf Basis von VTOL-Fahrzeuglärmmerkmalen für das VTOL-Fahrzeug und einem an dem geographischen Ort gemessenen Umgebungslärmpegel und den abgerufenen Fahrzeugauftriebsmotorparametern nicht zu überschreiten;
Bestimmen, ob die bestimmte motorspezifische Lüfterdrehzahl und der bestimmte motorspezifische Lüfterneigungswinkel für die Vielzahl von Fahrzeugauftriebsmotoren es dem VTOL-Fahrzeug erlauben, innerhalb seiner Sicherheitsbereichsgrenze betrieben zu werden; und
Senden eines motorspezifischen Lüfterdrehzahlbefehls und eines motorspezifischen Lüfterneigungswinkelbefehls an die Auftriebsmotorsteuerung, um zu verursachen, dass die Fahrzeugauftriebsmotoren mit der bestimmten motorspezifischen Lüfterdrehzahl und dem bestimmten motorspezifischen Lüfterneigungswinkel für den Auftriebsmotor an dem spezifischen geographischen Ort betrieben werden, wenn bestimmt wird, dass die bestimmte motorspezifische Lüfterdrehzahl und der bestimmte motorspezifische Lüfterneigungswinkel für die Vielzahl von Fahrzeugauftriebsmotoren es dem VTOL-Fahrzeug erlauben, innerhalb seiner Sicherheitsbereichsgrenze betrieben zu werden.

6. Verfahren nach Anspruch 5, ferner umfassend:
Abrufen von VTOL-Betriebsparametern an dem spezifischen Ort, die eines oder mehrere aus Ort, Flughöhe und Geschwindigkeit umfassen; und
dynamisches Bestimmen, für die Vielzahl von Fahrzeugauftriebsmotoren, einer motorspezifischen Lüfterdrehzahl und eines motorspezifischen Lüfterneigungswinkels, die es dem VTOL-Fahrzeug erlauben, hinreichend Auftrieb zu erzielen und den identifizierten VTOL-Lärmpegel an dem spezifischen geographischen Ort auf Basis der abgerufenen Betriebsparameter nicht zu überschreiten.

7. Verfahren nach Anspruch 6, ferner umfassend:
Abrufen von Umgebungsparametern für den spezifischen geographischen Ort, wobei die abgerufenen Umgebungsparameter eines oder mehrere aus Wetter, Wind, Verkehrsstatus und Vertiport-Status umfassen; und
dynamisches Bestimmen, für die Vielzahl von Fahrzeugauftriebsmotoren, einer motorspezifischen Lüfterdrehzahl und eines motorspezifischen Lüfterneigungswinkels, die es dem VTOL-Fahrzeug erlauben, hinreichend Auftrieb zu erzielen und den identifizierten VTOL-Lärmpegel an dem spezifischen geographischen Ort auf Basis der abgerufenen Umgebungsparameter nicht zu überschreiten.

8. Verfahren nach Anspruch 7, ferner umfassend:
dynamisches Bestimmen, für die Vielzahl von Fahrzeugauftriebsmotoren, der motorspezifischen Lüfterdrehzahl und des motorspezifischen Lüfterneigungswinkels, die es dem VTOL-Fahrzeug erlauben, hinreichend Auftrieb zu erzielen und den identifizierten VTOL-Lärmpegel an dem spezifischen geographischen Ort während eines Starts oder einer Landung an dem geographischen Ort nicht zu überschreiten.

## Revendications

1. Système de réduction de bruit (122) dans un véhicule à décollage et atterrissage verticaux (ADAV) comprenant une pluralité de moteurs de sustentation du véhicule (120) et un contrôleur de moteur de sustentation (106) pour les moteurs de sustentation du véhicule, le système de réduction de bruit comprenant un contrôleur (102, 104) configuré pour :
identifier un niveau de bruit de l'ADAV auquel le véhicule ADAV peut fonctionner à un emplacement géographique spécifique, afin de ne pas occasionner un niveau de bruit total à l'emplacement géographique dépassant un niveau de bruit seuil prédéterminé ;
récupérer des paramètres de moteur de sustentation du véhicule comprenant un état de la batterie pour la pluralité de moteurs de sustentation sur le véhicule ADAV, l'état de la batterie comprenant la charge de la batterie, la température de la batterie et les taux de décharge de la batterie sur une enveloppe de vol calculée pour chacun de la pluralité des moteurs de sustentation du véhicule, ainsi qu'un état du ventilateur pour la pluralité de moteurs de sustentation du véhicule sur le véhicule ADAV ; et
déterminer dynamiquement, pour la pluralité de moteurs de sustentation du véhicule, un TPM du ventilateur spécifique au moteur et un pas du ventilateur spécifique au moteur (117) qui permettront au véhicule ADAV d'obtenir une portance suffisante et de ne pas dépasser le niveau de bruit identifié de l'ADAV à l'emplacement géographique spécifique, en fonction des caractéristiques de bruit du véhicule ADAV et d'un niveau de bruit ambiant mesuré à l'emplacement géographique et des paramètres récupérés du moteurs de sustentation du véhicule ;
déterminer si le TPM du ventilateur spécifique au moteur et le pas du ventilateur spécifique au moteur (117) déterminés pour la pluralité de moteurs de sustentation du véhicule permettront au véhicule ADAV de fonctionner dans son enveloppe de sécurité ; et
provoquer l'envoi d'une commande du TPM du ventilateur spécifique au moteur et une commande du pas du ventilateur spécifique au moteur (115) au contrôleur de moteur de sustentation (106) pour faire fonctionner les moteurs de sustentation du véhicule au TPM du ventilateur spécifique au moteur et au pas du ventilateur spécifique au moteur déterminés pour le moteur de sustentation à l'emplacement géographique spécifique, lorsqu'il est déterminé que le TPM du ventilateur spécifique au moteur et le pas du ventilateur spécifique au moteur déterminés pour la pluralité de moteurs de sustentation du véhicule permettront au véhicule ADAV de fonctionner dans son enveloppe de sécurité.

2. Système de réduction de bruit de la revendication 1, dans lequel le contrôleur (102, 104) est en outre configuré pour :
récupérer des paramètres de fonctionnement de l'ADAV à l'emplacement géographique spécifique, comprenant un ou plusieurs éléments parmi l'emplacement, l'altitude et la vitesse ; et
déterminer dynamiquement, pour la pluralité de moteurs de sustentation du véhicule, le TPM du ventilateur spécifique au moteur et le pas du ventilateur spécifique au moteur qui permettront au véhicule ADAV d'obtenir une portance suffisante et de ne pas dépasser le niveau de bruit identifié de l'ADAV à l'emplacement géographique spécifique, en fonction des paramètres de fonctionnement récupérés.

3. Système de réduction de bruit de la revendication 2, dans lequel le contrôleur (102, 104) est en outre configuré pour :
récupérer des paramètres environnementaux pour l'emplacement géographique spécifique, les paramètres environnementaux récupérés comprenant un ou plusieurs éléments parmi la météo, le vent, l'état du trafic et l'état du vertiport ; et
déterminer dynamiquement, pour la pluralité de moteurs de sustentation du véhicule, le TPM du ventilateur spécifique au moteur et le pas du ventilateur spécifique au moteur qui permettront au véhicule ADAV d'obtenir une portance suffisante et de ne pas dépasser le niveau de bruit identifié de l'ADAV à l'emplacement géographique spécifique, en fonction des paramètres environnementaux récupérés.

4. Système de réduction de bruit de la revendication 3, dans lequel le contrôleur (102, 104) est en outre configuré pour :
déterminer dynamiquement, pour la pluralité de moteurs de sustentation du véhicule, le TPM du ventilateur spécifique au moteur et le pas du ventilateur spécifique au moteur qui permettront au véhicule ADAV d'obtenir une portance suffisante et de ne pas dépasser le niveau de bruit identifié de l'ADAV à l'emplacement géographique spécifique lors d'un décollage ou d'un atterrissage à l'emplacement géographique.

5. Procédé dans un véhicule à décollage et atterrissage verticaux (ADAV) pour la réduction du niveau de bruit émis, le véhicule ADAV comprenant une pluralité de moteurs de sustentation du véhicule et un contrôleur de moteur de sustentation pour les moteurs de sustentation du véhicule, le procédé comprenant :
l'identification d'un niveau de bruit de l'ADAV à partir duquel le véhicule ADAV peut fonctionner à un emplacement géographique spécifique, de manière à ne pas occasionner un niveau de bruit total à l'emplacement géographique dépassant un niveau de bruit seuil prédéterminé ;
la récupération de paramètres de moteur de sustentation du véhicule comprenant un état de la batterie pour la pluralité de moteurs de sustentation du véhicule sur le véhicule ADAV, l'état de la batterie comprenant la charge de la batterie, la température de la batterie et les taux de décharge de la batterie sur une enveloppe de vol calculée pour chacun de la pluralité des moteurs de sustentation du véhicule, ainsi qu'un état du ventilateur pour la pluralité de moteurs de sustentation du véhicule sur le véhicule ADAV ;
la détermination dynamique, pour la pluralité de moteurs de sustentation du véhicule, du TPM du ventilateur spécifique au moteur et du pas du ventilateur spécifique au moteur qui permettront au véhicule ADAV d'obtenir une portance suffisante et de ne pas dépasser le niveau de bruit identifié de l'ADAV à l'emplacement géographique spécifique, en fonction des caractéristiques de bruit du véhicule ADAV pour le véhicule ADAV et un niveau de bruit ambiant mesuré à l'emplacement géographique et des paramètres récupérés du moteur de sustentation du véhicule ;
la détermination si le TPM du ventilateur spécifique au moteur et le pas du ventilateur spécifique au moteur déterminés pour la pluralité de moteurs de sustentation du véhicule permettront au véhicule ADAV de fonctionner dans son enveloppe de sécurité ; et
l'envoi d'une commande du TPM du ventilateur spécifique au moteur et d'une commande du pas du ventilateur spécifique au moteur au contrôleur de moteur de sustentation, pour amener les moteurs de sustentation du véhicule à fonctionner au TPM du ventilateur spécifique au moteur et au pas du ventilateur spécifique au moteur déterminés pour le moteur de sustentation à l'emplacement géographique spécifique, lorsqu'il est déterminé que le TPM du ventilateur spécifique au moteur et que le pas du ventilateur spécifique au moteur déterminés pour la pluralité de moteurs de sustentation du véhicule permettront au véhicule ADAV de fonctionner dans son enveloppe de sécurité.

6. Procédé de la revendication 5, comprenant en outre :
la récupération de paramètres de fonctionnement de l'ADAV à l'emplacement géographique spécifique, comprenant un ou plusieurs éléments parmi l'emplacement, l'altitude et la vitesse ; et
la détermination dynamique, pour la pluralité de moteurs de sustentation du véhicule, du TPM du ventilateur spécifique au moteur et du pas du ventilateur spécifique au moteur qui permettront au véhicule ADAV d'obtenir une portance suffisante et de ne pas dépasser le niveau de bruit identifié de l'ADAV à l'emplacement géographique spécifique, en fonction des paramètres de fonctionnement récupérés.

7. Procédé de la revendication 6, comprenant en outre :
la récupération de paramètres environnementaux pour l'emplacement géographique spécifique, les paramètres environnementaux récupérés comprenant un ou plusieurs éléments parmi la météo, le vent, l'état du trafic et l'état du vertiport ; et
la détermination dynamique, pour la pluralité de moteurs de sustentation du véhicule, du TPM du ventilateur spécifique au moteur et du pas du ventilateur spécifique au moteur qui permettront au véhicule ADAV d'obtenir une portance suffisante et de ne pas dépasser le niveau de bruit identifié de l'ADAV à l'emplacement géographique spécifique, en fonction des paramètres environnementaux récupérés.

8. Procédé de la revendication 7, comprenant en outre :
la détermination dynamique, pour la pluralité de moteurs de sustentation du véhicule, du TPM du ventilateur spécifique au moteur et du pas du ventilateur spécifique au moteur qui permettront au véhicule ADAV d'obtenir une portance suffisante et de ne pas dépasser le niveau de bruit identifié de l'ADAV à l'emplacement géographique spécifique lors d'un décollage ou d'un atterrissage à l'emplacement géographique.
